# EUROPEAN PATENT SPECIFICATION

(11) **EP 2 110 982 B1**
(45) Date of publication and mention of the grant of the patent: **03.04.2013**
(21) Application number: 08757534.6
(22) Date of filing: 28.05.2008
(51) Int. Cl.: H04L 12/14

(54) **A CHARGING METHOD AND SYSTEM FOR COMMUNICATION SERVICE IN A COMMUNICATION NETWORK**
AUFLADEVERFAHREN UND SYSTEM FÜR KOMMUNIKATIONSDIENST IN EINEM KOMMUNIKATIONSNETZ
PROCÉDÉ DE FACTURATION ET SYSTÈME DESTINÉS À UN SERVICE DE COMMUNICATION DANS UN RÉSEAU DE COMMUNICATION

(30) Priority: 09.07.2007 CN 200710075921
(43) Date of publication of application: 21.10.2009
(73) Proprietor: Huawei Technologies Co., Ltd., Longgang District, Shenzhen Guangdong 518129 (CN)
(72) Inventor: LIU, Zheng, Shenzhen, Guangdong 518129 (CN)
(74) Representative: Körber, Martin Hans
(86) International application number: PCT/CN2008/071122
(87) International publication number: WO 2009/006806

(56) References cited:
- EP-A1- 1 437 858
- CN-A- 1 581 857
- CN-A- 1 794 637
- CN-A- 1 859 137

## Description

### FIELD OF THE TECHNOLOGY

The present invention relate to the field of charging in communication networks, and more particularly to a system and method for a gateway to charge for a service, when a service provider provides the service for a service receiver.

### BACKGROUND

It has become an important telecom service mode for a service provider to provide a telecom service for a telecom subscriber via an open service gateway.

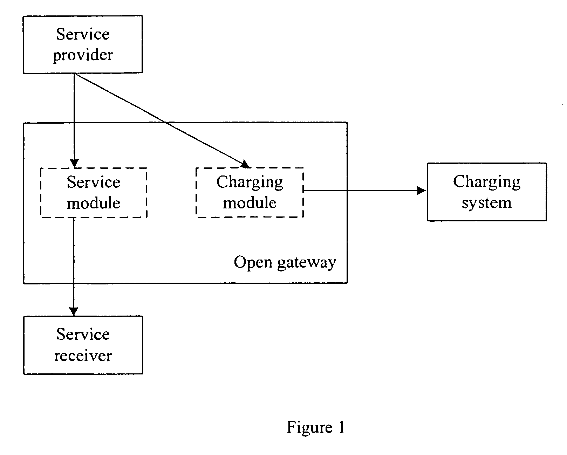

Two types of capabilities are defined in the open service gateway for the service provider to use. One is telecom service capability, such as short message service (SMS) and third-party call. The other is management capability, such as charging, account management, and address management. As defined by existing specifications, the service provided by the service provider is independently charged by the service provider by invoking a charging module in an open service gateway. That is to say, the service provider uses the management capability provided by the open service gateway. As shown in Figure 1, a process for a service provider to provide and charge for a service includes the steps as follows.

A service provider provides a telecom service for a service receiver by invoking a service module in an open service gateway. The service provider invokes a charging module in the open service gateway to charge for the provided service, and the charging module further invokes a charging system to complete the charging operation.

In such a charging mode, the service provider independently charges for the provided service by invoking the charging module in the open service gateway. If a telecom operator is responsible for the service receiver while the service provider is independent of the telecom operator, such a charging mode has a risk of false and fraudulent charges that may adversely affect the service of the telecom operator. European Patent EP 1437858A1 discloses a charging method, in which an access point generates an access identifier according to the request from a service computer, and sends the access identifier to the service computer for limiting the lasting time of accessing a charging system by the service computer.

### SUMMARY

Accordingly, embodiments of the present invention provide a communication network, a network system and an open service gateway subsystem for developing and charging for a service in the communication network, a method for charging for communication services in the communication network, and a method for providing communication services in the communication network. By applying the network, system, and method according to the embodiments of the present invention, the service providing subsystem may provide a service for the service receiving subsystem, and the open service gateway subsystem may charge for the service. The present invention aims to provide a new technical solution for providing a telecom service and improve the reliability in charging for the telecom service.

A method for charging for communication services according to claim 1 is provided in an embodiment of the present invention.

An open service gateway subsystem according to claim 6 is provided in an embodiment of the present invention.

A network system according to claim 8 is provided in an embodiment of the present invention.

The technical solution disclosed by the embodiments of the present invention provides a new method for providing a service, and may also enhance the control of the open gateway controller over the charging process, so that the reliability in charging is improved.

### BRIEF DESCRIPTION OF THE DRAWINGS

Figure 1 is a block diagram of an existing system for providing and charging for a service;

Figure 2 is a block diagram of a system according to a first embodiment of the present invention;

Figure 3 is a flow chart of the first embodiment of the present invention;

Figure 4 is another flow chart of the first embodiment of the present invention;

Figure 5 is a block diagram of a system according to a second embodiment of the present invention; and

Figure 6 is a flow chart of the second embodiment of the present invention.

### DETAILED DESCRIPTION

The embodiments of the present invention are illustrated in detail below with the accompanying drawings.

In an embodiment of the present invention, rating information may include: service provider identity (ID) information, service initiator number information, service receiver number information, service ID information, and other specific service-related information. The type of the service provider may include: a trusted service provider and untrustworthy service provider. The type of the service provider may be determined by a telecom operator according to actual operating requirements. The untrustworthy service provider (briefly referred to as a "first service provider" below) may be: an untrustworthy service provider, a service provider that provides an untrustworthy service, or other service providers that do not need to be authorized with a charging right. The trusted service provider (briefly referred to as a "second service provider" below) may be a trusted service provider, a service provider that provides a trusted service, or other service providers that need to be authorized with a charging right. In order to easily identify a type of a service provider that sends a service request according to the service request, a trusted service provider ID, a trusted service ID, an untrustworthy service provider ID, and an untrustworthy service ID that have been authenticated by the telecom operator may be pre-stored in an open service gateway.

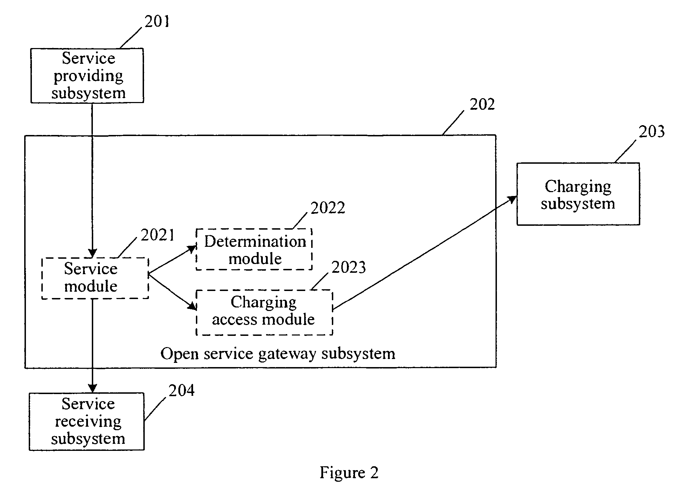

As shown in Figure 2, a communication network provided in an embodiment of the present invention includes a service providing subsystem 201, an open service gateway subsystem 202, a charging subsystem 203, and a service receiving subsystem 204. In this communication network, the service providing subsystem 201 provides service to the service receiving subsystem 204 via the open service gateway subsystem 202. The charging subsystem 203 receives rating information from the open service gateway subsystem 202 and charges for the service provided by the service providing subsystem 201.

The service providing subsystem 201 is generally a service server, and may also be other devices for providing a telecom service. In the present invention, the service providing subsystem 201 may be a first service provider or a second service provider. The first service provider is an untrustworthy service provider, a service provider that provides untrustworthy service, or other service providers that do not need to be authorized with a charging right. The second service provider is a trusted service provider, a service provider that provides a trusted service, or other service providers capable of charging independently. If the service providing subsystem 201 intends to provide service to the service receiving subsystem 204, the service providing subsystem 201 sends a service request to the open service gateway subsystem 202 first.

The open service gateway subsystem 202 for developing and charging for a service in the communication network provided in the embodiment of the present invention is an open gateway system, by which a telecom service provider provides a service to a telecom subscriber via a telecom network. The open gateway subsystem 202 shown in Figure 2 includes a service module 2021, a determination module 2022, and a charging access module 2023.

The service module 2021 receives a service request from the service providing subsystem 201 and invokes the determination module 2022 to determine the type of the service providing subsystem 201. If the determination module 2022 determines that the service providing subsystem 201 is the first service provider, the service module 2021 generates rating information and sends the rating information to the charging access module 2023. If the determination module 2022 determines that the service providing subsystem 201 is the second service provider, the service module 2021 also generates rating information and sends the rating information to the charging access module 2023. In this way, no matter for the service provided by the first service provider or by the second service provider, rating information is generated by the open gateway subsystem 202, so the charging mode becomes more flexible. The service module 2021 further provides the service for the service receiving subsystem 204 according to the service request from the service providing subsystem 201.

The determination module 2022 is invoked by the service module 2021 to determine the type of the service providing subsystem 201. The determination module 2022 determines the type of the service providing subsystem 201 according to a predefined identifier of the service providing subsystem 201. The identifier may be an ID or password of the service providing subsystem 201, or other IDs for distinguishing different service providing subsystems 201.

The charging access module 2023 receives the rating information from the service module 2021 and sends the rating information to the charging subsystem 203.

The charging subsystem 203 is a system for charging for a telecom service, receives the rating information from the charging access module 2023, and charges for the service provided by the service providing subsystem 201.

The service receiving subsystem 204 is a telecom service receiving device used by a subscriber of a telecom operator, and is generally a fixed or mobile communication terminal and may also be other information transceiver devices. In the network of this embodiment, the service receiving subsystem 204 receives the service provided by the service providing subsystem 201 from the open service gateway subsystem 202.

As shown in Figure 2, the open service gateway subsystem 202 and the charging subsystem 203 constitute a network system for developing and charging for service in the communication network disclosed in the embodiment of the present invention. An open service gateway in the network system is the open service gateway subsystem 202 as shown in Figure 2.

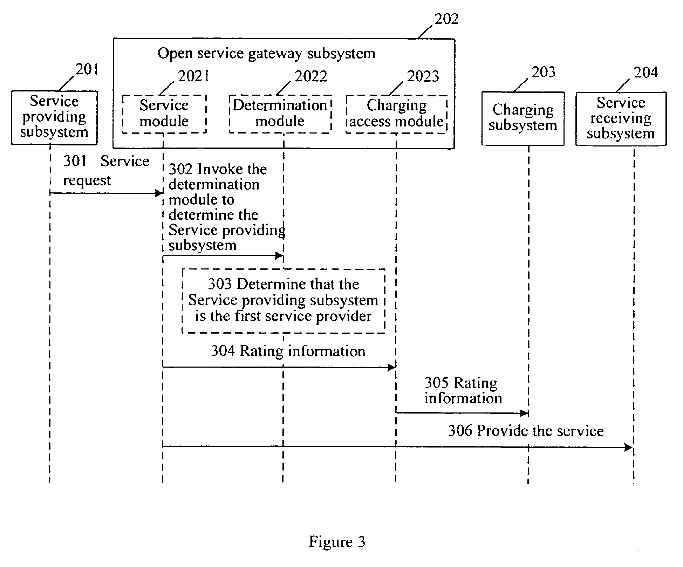

As shown in Figure 3, based on the communication network of the above embodiment, when the service providing subsystem 201 is an untrustworthy service provider or a service provider that provides untrustworthy service, that is the first service provider, the process for providing and charging for service in the communication network is as follows.

In Step 301, the service providing subsystem 201 sends a service request to the open service gateway subsystem 202, and the service module 2021 in the open service gateway subsystem 202 receives the service request.

In Step 302, the service module 2021 in the open service gateway subsystem 202 invokes the determination module 2022 in the open service gateway subsystem 202.

In Step 303, the determination module 2022 determines that the service providing subsystem 201 is the first service provider according to an identifier of the service providing subsystem 201. The identifier may be an ID or password of the service providing subsystem 201, or other IDs.

In Step 304, the service module 2021 generates rating information and sends the rating information to the charging access module 2023, and the charging access module 2023 receives the rating information.

In Step 305, the charging access module 2023 sends the rating information to the charging subsystem 203, and the charging subsystem 203 receives the information and charges for a service according to the rating information.

In Step 306, the open service gateway subsystem 202 provides the service for the service receiving subsystem 204 via the service module 2021.

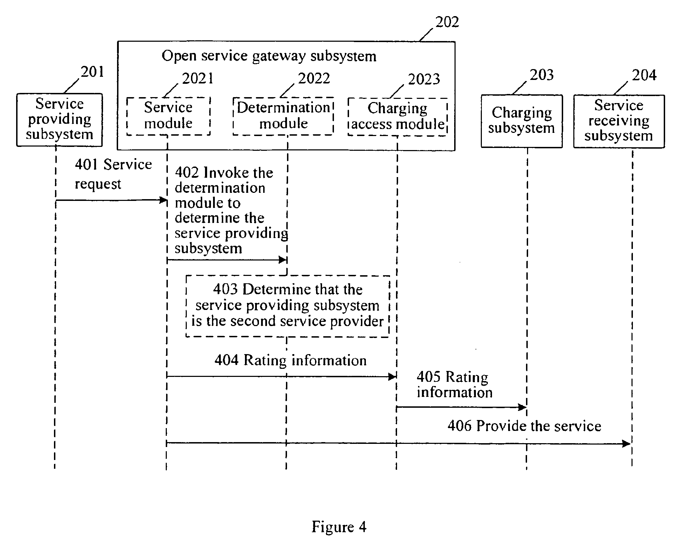

As shown in Figure 4, based on the above communication network, when the service providing subsystem 201 is a trusted service provider or a service provider that provides trusted service, that is the second service provider, the process for providing and charging for a service in the communication network is as follows.

In Step 401, the service providing subsystem 201 sends a service request to the open service gateway subsystem 202, and the service module 2021 in the open service gateway subsystem 202 receives the service request.

In Step 402, the service module 2021 in the open service gateway subsystem 202 invokes the determination module 2022 in the open service gateway subsystem 202.

In Step 403, the determination module 2022 determines that the service providing subsystem 201 is the second service provider according to an identifier of the service providing subsystem 201. The identifier may be an ID or password of the service providing subsystem 201, or other IDs.

In Step 404, the service module 2021 generates rating information and sends the rating information to the charging access module 2023, and the charging access module 2023 receives the rating information.

In Step 405, the charging access module 2023 sends the rating information to the charging subsystem 203, and the charging subsystem 203 receives the information and charges for the service according to the rating information.

In Step 406, the open service gateway subsystem 202 provides the service for the service receiving subsystem 204 via the service module 2021.

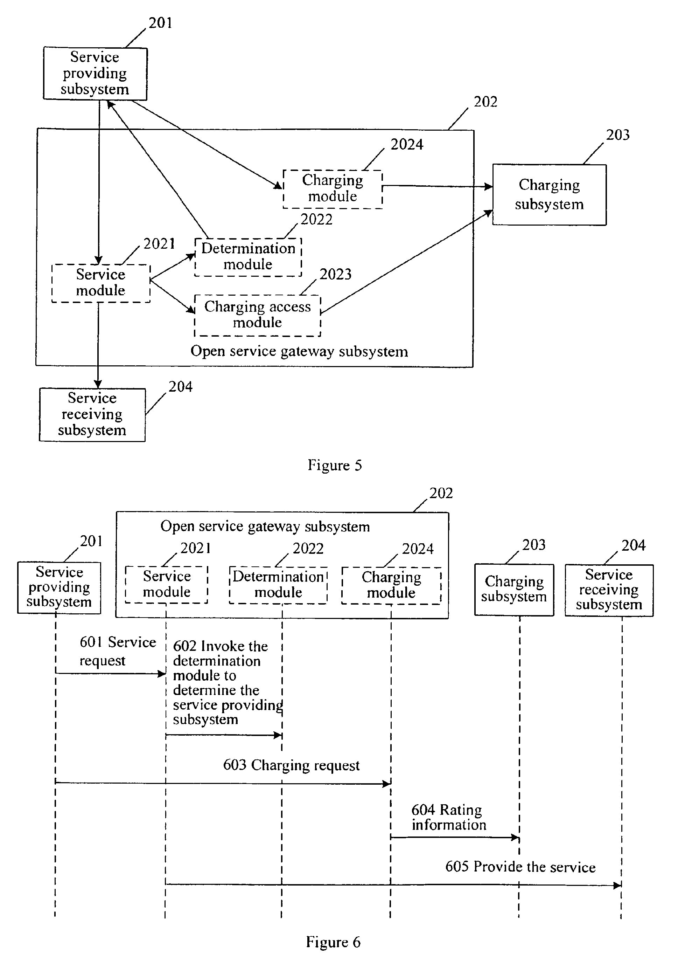

As shown in Figure 5, another embodiment of the present invention is provided.

If the determination module 2022 determines that the type of the service providing subsystem 201 is the first service provider, the invocation and connection relationship among the devices in the network is the same as the above embodiment. If the determination module 2022 determines that the type of the service providing subsystem 201 is the second service provider, the determination module 2022 needs to be connected to the service providing subsystem 201 to notify a determination result to the service providing subsystem 201, and the service providing subsystem 201 invokes a charging module 2024 in the open service gateway subsystem 202 to independently complete the charging operation after knowing the determination result.

As shown in Figure 6, based on the system of Figure 5, when the service providing subsystem 201 is the trusted service provider or the service provider that provides trusted service, that is the second service provider, the process for providing and charging for the service provided by the second service provider in the communication network is as follows.

In Step 601, the service providing subsystem 201 sends a service request to the open service gateway subsystem 202, and the service module 2021 in the open service gateway subsystem 202 receives the service request.

In Step 602, the service module 2021 in the open service gateway subsystem 202 invokes the determination module 2022 in the open service gateway subsystem 202, and the determination module 2022 determines that the service providing subsystem 201 is the second service provider according to an identifier of the service providing subsystem 201. The identifier may be an ID or password of the service providing subsystem 201, or other IDs.

In Step 603, the service providing subsystem 201 generates a charging request and sends the charging request to the charging module 2024, and the charging module 2024 receives the request.

In Step 604, the charging module 2024 generates rating information according to the charging request and sends the rating information to the charging subsystem 203, and the charging subsystem 203 receives the information and charges for a service according to the information.

In Step 605, the open service gateway subsystem 202 provides the service for the service receiving subsystem 204 via the service module 2021.

From the other aspect, the above embodiments of the method for charging for communication services may be described as: a method for charging for communication services, including the steps as follows:
generating, according to the service request, rating information corresponding to a service provider that sends the service request; and
sending the rating information to a charging subsystem, and instructing the charging subsystem to charge according to the rating information.

In the above technical solution, the generating the rating information corresponding to the service provider that sends the service request includes the following: a type of the service provider according to the received service request is identified; and the corresponding rating information according to the type of the service provider is generated.

In the above technical solution, when the service request includes a service provider ID corresponding to the service provider, the identifying the type of the service provider includes the following: the type of the service provider is identified as an untrustworthy service provider, if the service provider ID is a pre-stored untrustworthy service provider ID. Or, when the service request includes a service ID corresponding to service provided by the service provider, the identifying the type of the service provider includes the following: the type of the service provider is identified as an untrustworthy service provider, if the service ID is a pre-stored untrustworthy service ID.

In the above technical solution, when the service request includes a service provider ID corresponding to the service provider, the identifying the type of the service provider includes the following: the type of the service provider is identified as a trusted service provider, if the service provider ID is a pre-stored trusted service provider ID. Or, when the service request includes a service ID corresponding to service provided by the service provider, the identifying the type of the service provider includes the following: the type of the service provider is identified as a trusted service provider, if the service ID is a pre-stored trusted service ID.

In the above technical solution, the generating the corresponding rating information according to the type of the service provider includes the following: the service provider is instructed to generate a charging request, if the type of the service provider is a trusted service provider; the charging request is received and the rating information is generated according to the charging request.

The above technical solution may further include the following: the service corresponding to the service request is provided for a service receiver when the charging subsystem charges according to the rating information.

From another angle, the above embodiments of the open service gateway may be described as follows: an open service gateway including a service module and a charging access module is provided. The service module is adapted to receive a service request, and generate, according to the service request, rating information corresponding to a service provider that sends the service request; and the charging access module is adapted to send the rating information to a charging subsystem, and instruct the charging subsystem to charge according to the rating information.

In the above technical solution, the open service gateway may further include a determination module and the service module. The determination module is adapted to identify a type of the service provider according to the service request and send an identification result to the service module; and the service module is further adapted to generate the corresponding rating information according to the type of the service provider.

In the above technical solution, the determination module may include a storage unit and a determination unit. The storage unit is adapted to store a trusted service provider ID, a trusted service ID, an untrustworthy service provider ID, and an untrustworthy service ID; and the determination unit is adapted to determine, according to information stored in the storage unit as well as a service provider ID corresponding to the service provider or a service ID corresponding to a service provided by the service provider that is contained in the service request, that the type of the service provider is a trusted service provider or an untrustworthy service provider, and send a determination result to the service module.

In the above technical solution, the determination module may further include a processing unit. The processing unit is adapted to instruct the service provider to generate, according to the determination result of the determination unit, a charging request, if the type of the service provider is a trusted service provider. The service module is further adapted to generate, according to the charging request, the corresponding rating information.

From another angle, the above embodiments of the system for charging for communication services may be described as follows: a system for charging for communication services including a service provider, a service receiver, an open service gateway, and a charging subsystem is provided. The service provider provides a communication service for the service receiver via the open service gateway. The charging subsystem charges for the communication service. The open service gateway includes a service module and a charging access module. The service module is adapted to receive a service request, and generate rating information corresponding to a service provider that sends the service request according to the service request; and the charging access module is adapted to send the rating information to a charging subsystem, and instruct the charging subsystem to charge according to the rating information.

In the above technical solution, the open service gateway may further include a determination module. The determination module is adapted to identify, according to the service request, the type of the service provider, and send the identification result to the service module. The service module may further be adapted to generate the corresponding rating information according to the type of the service provider.

In the above technical solution, the determination module may include a storage unit and a determination unit. The storage unit is adapted to store a trusted service provider ID, a trusted service ID, an untrustworthy service provider ID, and an untrustworthy service ID; and the determination unit is adapted to determine, according to information stored in the storage unit as well as a service provider ID corresponding to the service provider or a service ID corresponding to a service provided by the service provider that is contained in the service request, that the type of the service provider is the trusted service provider or the untrustworthy service provider, and send a determination result to the service module.

In the above technical solution, the determination module may further include a processing unit. The processing unit is adapted to instruct the service provider to generate, according to the determination result of the determination unit, a charging request, if the type of the service provider is a trusted service provider; and the service module may further be adapted to generate, according to the charging request, the corresponding rating information.

The above device embodiments are merely exemplary. Units described as separate components may be or may not be physically separated. Components shown as units may be or may not be physical units, that is, may be located at one place or distributed in a plurality of network units. Some or all of the modules may be selected and adapted to achieve the objective of the solution of the embodiments according to actual demands. Those of ordinary skill in the art may understand and implement the present invention without creative labor.

Through the above description of the embodiments, it is apparent to those skilled in the art that the embodiments may be accomplished by software on a necessary universal hardware platform, and definitely may also be accomplished by hardware. Therefore, the above technical solution or the part that makes contributions to the prior art can be substantially embodied in the form of a software product. The computer software product may be stored in a computer readable storage media such as a ROM/RAM, a magnetic disk, or an optical disk, and contain several instructions to instruct a computer equipment (for example, a personal computer, a server, or a network equipment) to perform the method as described in the embodiments of the present invention or in some parts of the embodiments.

## Claims

1. A method for charging for communication services, comprising:
receiving (301), by an open service gateway (202), a service request from a service provider (201);
judging (303), by the open service gateway (202), whether the service provider (201) which sends the service request is a first service provider or a second service provider;
if the service provider is the first service provider, generating (304), by the open service gateway (202), rating information according to the service request and, if the service provider is the second service provider, instructing, by the open service gateway (202), the second service provider to generate a charging request, and generating, by the open service gateway (202), rating information according to the charging request received from the second service provider, wherein the rating information comprises specific service-related information; and
sending (305), by the open service gateway (202), the rating information to the charging subsystem (203) which charges according to the rating information.

2. The method according to claim 1, wherein the first service provider is an untrustworthy service provider or a service provider that provides untrustworthy service.

3. The method according to claim 1 or 2, wherein the second service provider (202) is a trusted service provider or a service provider that provides trusted service.

4. The method according to claim 2, wherein
the service request comprises a service provider identity, ID, corresponding to the service provider; and the open service gateway identifies that the first service provider is an untrustworthy service provider if the service provider ID is a pre-stored untrustworthy service provider ID; or
the service request comprises a service ID corresponding to service provided by the service provider; and the open service gateway identifies that the first service provider is a service provider that provides untrustworthy service if the service ID is a pre-stored untrustworthy service ID.

5. The method according to claim 3, wherein
the service request comprises a service provider identity, ID, corresponding to the service provider; and the open service gateway identifies that the second service provider is a trusted service provider if the service provider ID is a pre-stored trusted service provider ID; or
the service request includes a service ID corresponding to service provided by the service provider; and the open service gateway identifies that the second service provider is a service provider that provides trusted service if the service ID is a pre-stored trusted service ID.

6. An open service gateway, comprising:
a service module (2021), adapted to receive a service request from a service provider (201);
a determination module (2022), adapted to identify if the service provider (201) is a first or a second service provider according to the service request and send an identification result to the service module (2021), and further adapted to instruct the service provider (201) to generate a charging request, if the service provider (201) is a second service provider,
wherein the service module (2021) is further adapted to generate the corresponding rating information according to the service request if the service provider (201) is a first service provider, and generate the corresponding rating information according to the charging request received from the service provider (201) if the service provider (201) is a second service provider; and
a charging access module (2023), adapted to send the rating information to a charging subsystem (203), and instruct the charging subsystem (203) to charge according to the rating information, wherein the rating information comprises specific service-related information.

7. The open service gateway according to claim 6, wherein the determination module (2022) comprises:
a storage unit, adapted to store a trusted service provider identity, ID, a trusted service ID, an untrustworthy service provider ID, and an untrustworthy service ID; and
a determination unit, adapted to determine, according to information stored in the storage unit as well as a service provider ID corresponding to the service provider or a service ID corresponding to service provided by the service provider that is contained in the service request, that the type of the service provider is a trusted service provider or an untrustworthy service provider, and send a determination result to the service module (2021).

8. A network system, comprising a service provider (201), a service receiver (204), an open service gateway (202) according to claim 6 or 7, and a charging subsystem (203), wherein
the service provider (201) is adapted to provide a service for the service receiver (204) via the open service gateway (202);
the charging subsystem (203) is adapted to charge according to the rating information.

9. The network system according to claim 8, wherein the second service provider is a trusted service provider or a service provider that provides trusted service and the first service provider is an untrustworthy service provider or a service provider that provides untrustworthy service.

## Patentansprüche

1. Verfahren zur Gebührenerhebung für Kommunikationsdienste, das Folgendes umfasst:
Empfangen (301) durch ein Gateway (202) für offenen Dienst einer Dienstanforderung von einem Dienstanbieter (201);
Beurteilen (303) durch das Gateway (202) für offenen Dienst, ob der Dienstanbieter (201), der die Dienstanforderung sendet, ein erster Dienstanbieter oder ein zweiter Dienstanbieter ist;
falls der Dienstanbieter der erste Dienstanbieter ist, Erzeugen (304) durch das Gateway (202) für offenen Dienst von Bewertungsinformationen in Übereinstimmung mit der Dienstanforderung und, falls der Dienstanbieter der zweite Dienstanbieter ist, Anweisen durch das Gateway (202) für offenen Dienst des zweiten Dienstanbieters, eine Gebührenerhebungsanforderung zu erzeugen, und Erzeugen durch das Gateway (202) für offenen Dienst von Bewertungsinformationen in Übereinstimmung mit der Gebührenerhebungsanforderung, die von dem zweiten Dienstanbieter empfangen wird, wobei die Bewertungsinformationen spezifische dienstbezogene Dienstinformationen enthalten; und
Senden (305) durch das Gateway (202) für offenen Dienst der Bewertungsinformationen zu dem Gebührenerhebungs-Untersystem (203), das in Übereinstimmung mit den Bewertungsinformationen eine Gebührenerhebung vornimmt.

2. Verfahren nach Anspruch 1, wobei der erste Dienstanbieter ein nicht vertrauenswürdiger Dienstanbieter oder ein Dienstanbieter, der einen nicht vertrauenswürdigen Dienst anbietet, ist.

3. Verfahren nach Anspruch 1 oder 2, wobei der zweite Dienstanbieter (202) ein vertrauenswürdiger Dienstanbieter oder ein Dienstanbieter, der einen vertrauenswürdigen Dienst anbietet, ist.

4. Verfahren nach Anspruch 2, wobei
die Dienstanforderung eine Dienstanbieterkennung, Dienstanbieter-ID, die dem Dienstanbieter entspricht, enthält; und das Gateway für offenen Dienst identifiziert, dass der erste Dienstanbieter ein nicht vertrauenswürdiger Dienstanbieter ist, falls die Dienstanbieter-ID eine im Voraus gespeicherte nicht vertrauenswürdige Dienstanbieter-ID ist; oder
die Dienstanforderung eine Dienst-ID enthält, die dem von dem Dienstanbieter angebotenen Dienst entspricht; und das Gateway für offenen Dienst identifiziert, dass der erste Dienstanbieter ein Dienstanbieter ist, der einen nicht vertrauenswürdigen Dienst anbietet, falls die Dienst-ID eine im Voraus gespeicherte nicht vertrauenswürdige Dienst-ID ist.

5. Verfahren nach Anspruch 3, wobei
die Dienstanforderung eine Dienstanbieterkennung, Dienstanbieter-ID, enthält, die dem Dienstanbieter entspricht; und das Gateway für offenen Dienst identifiziert, dass der zweite Dienstanbieter ein vertrauenswürdiger Dienstanbieter ist, falls die Dienstanbieter-ID eine im Voraus gespeicherte vertrauenswürdige Dienstanbieter-ID ist; oder
die Dienstanforderung eine Dienst-ID enthält, die einem Dienst entspricht, der von dem Dienstanbieter angeboten wird; und das Gateway für offenen Dienst identifiziert, dass der zweite Dienstanbieter ein Dienstanbieter ist, der einen vertrauenswürdigen Dienst anbietet, falls die Dienst-ID eine im Voraus gespeicherte vertrauenswürdige Dienst-ID ist.

6. Gateway für offenen Dienst, das Folgendes enthält:
ein Dienstmodul (2021), das dafür ausgelegt ist, eine Dienstanforderung von einem Dienstanbieter (201) zu empfangen;
ein Bestimmungsmodul (2022), das dafür ausgelegt ist, in Übereinstimmung mit der Dienstanforderung zu identifizieren, ob der Dienstanbieter (201) ein erster oder ein zweiter Dienstanbieter ist, und ein Identifizierungsergebnis zu dem Dienstmodul (2021) zu senden, und ferner dazu ausgelegt ist, den Dienstanbieter (201) anzuweisen, eine Gebührenerhebungsanforderung zu erzeugen, falls der Dienstanbieter (201) ein zweiter Dienstanbieter ist,
wobei das Dienstmodul (2021) ferner dafür ausgelegt ist, in Übereinstimmung mit der Dienstanforderung die entsprechenden Bewertungsinformationen zu erzeugen, falls der Dienstanbieter (201) ein erster Dienstanbieter ist, und die entsprechenden Bewertungsinformationen in Übereinstimmung mit der von dem Dienstanbieter (201) empfangenen Gebührenerhebungsanforderung zu erzeugen, falls der Dienstanbieter (201) ein zweiter Dienstanbieter ist; und
ein Gebührenerhebungs-Zugriffsmodul (2023), das dafür ausgelegt ist, die Bewertungsinformationen zu einem Gebührenerhebungs-Untersystem (203) zu senden und das Gebührenerhebungs-Untersystem (203) anzuweisen, eine Gebührenerhebung in Übereinstimmung mit den Bewertungsinformationen vorzunehmen, wobei die Bewertungsinformationen spezifische dienstbezogene Informationen enthalten.

7. Gateway für offenen Dienst nach Anspruch 6, wobei das Bestimmungsmodul (2022) Folgendes enthält:
eine Speichereinheit, die dafür ausgelegt ist, eine vertrauenswürdige Dienstanbieterkennung, Dienstanbieter-ID, eine vertrauenswürdige Dienst-ID, eine nicht vertrauenswürdige Dienstanbieter-ID und eine nicht vertrauenswürdige Dienst-ID zu speichern; und
eine Bestimmungseinheit, die dafür ausgelegt ist, in Übereinstimmung mit Informationen, die in der Speichereinheit gespeichert sind, sowie mit einer Dienstanbieter-ID, die dem Dienstanbieter entspricht, oder einer Dienst-ID, die dem von dem Dienstanbieter angebotenen Dienst entspricht, die in der Dienstanforderung enthalten ist, zu bestimmen, dass der Typ des Dienstanbieters ein vertrauenswürdiger Dienstanbieter oder ein nicht vertrauenswürdiger Dienstanbieter ist, und ein Bestimmungsergebnis zu dem Dienstmodul (2021) zu senden.

8. Netzsystem, das einen Dienstanbieter (201), einen Dienstempfänger (204), ein Gateway (202) für offenen Dienst nach Anspruch 6 oder 7 und ein Gebührenerhebungs-Untersystem (203) enthält, wobei
der Dienstanbieter (201) dafür ausgelegt ist, einen Dienst für den Dienstempfänger (204) über das Gateway (202) für offenen Dienst bereitzustellen;
das Gebührenerhebungs-Untersystem (203) dafür ausgelegt ist, eine Gebührenerhebung in Übereinstimmung mit den Bewertungsinformationen vorzunehmen.

9. Netzsystem nach Anspruch 8, wobei der zweite Dienstanbieter ein vertrauenswürdiger Dienstanbieter ist oder ein Dienstanbieter ist, der einen vertrauenswürdigen Dienst anbietet, und der erste Dienstanbieter ein nicht vertrauenswürdiger Dienstanbieter ist oder ein Dienstanbieter ist, der einen nicht vertrauenswürdigen Dienst anbietet.

## Revendications

1. Procédé de facturation de services de communication, comprenant :
la réception (301), par une passerelle de service ouvert (202), d'une requête de service depuis un fournisseur de service (201) ;
l'établissement (303), par la passerelle de service ouvert (202), que le fournisseur de service (201) qui envoie la requête de service est ou non un premier fournisseur de service ou un second fournisseur de service ;
si le fournisseur de service est le premier fournisseur de service, la génération (304), par la passerelle de service ouvert (202), d'informations de tarif en fonction de la requête de service, et, si le fournisseur de service est le second fournisseur de service, l'ordre, par la passerelle de service ouvert (202), au second fournisseur de service de générer une requête de facturation, et la génération, par la passerelle de service ouvert (202), d'informations de tarif en fonction de la requête de facturation reçue du second fournisseur de service, les informations de tarif comprenant des informations relatives à un service spécifique ; et
l'envoi (305), par la passerelle de service ouvert (202), des informations de tarif au sous-système de facturation (203) qui facture en fonction des informations de tarif.

2. Procédé selon la revendication 1, dans lequel le premier fournisseur de service est un fournisseur de service non fiable ou un fournisseur de service qui fournit un service non fiable.

3. Procédé selon la revendication 1 ou 2, dans lequel le second fournisseur de service (202) est un fournisseur de service fiable ou un fournisseur de service qui fournit un service fiable.

4. Procédé selon la revendication 2, dans lequel
la requête de service comprend une identité, ID, de fournisseur de service, correspondant au fournisseur de service, et la passerelle de service ouvert établit que le premier fournisseur de service est un fournisseur de service non fiable si l'ID de fournisseur de service est une ID de fournisseur de service non fiable prémémorisée ;
ou
la requête de service comprend une ID de service, correspondant au service fourni par le fournisseur de service, et la passerelle de service ouvert établit que le premier fournisseur de service est un fournisseur de service qui fournit un service non fiable si l'ID de service est une ID de service non fiable prémémorisée.

5. Procédé selon la revendication 3, dans lequel
la requête de service comprend une identité, ID, de fournisseur de service, correspondant au fournisseur de service ; et la passerelle de service ouvert établit que le second fournisseur de service est un fournisseur de service fiable si l'ID de fournisseur de service est une ID de fournisseur de service fiable prémémorisée ; ou la requête de service comprend une ID de service correspondant au service fourni par le fournisseur de service ; et la passerelle de service ouvert établit que le second fournisseur de service est un fournisseur de service qui fournit un service fiable si l'ID de service est une ID de service fiable prémémorisée.

6. Passerelle de service ouvert, comprenant :
un module de service (2021), adapté pour recevoir une requête de service depuis un fournisseur de service (201) ;
un module de détermination (2022), adapté pour établir si le fournisseur de service (201) est un premier ou second fournisseur de service en fonction de la requête de service et envoyer un résultat d'identification au module de service (2021), et adapté en outre pour ordonner au fournisseur de service (201) de générer une requête de facturation, si le fournisseur de service (201) est un second fournisseur de service,
dans laquelle le module de service (2021) est adapté en outre pour générer les informations de tarif correspondantes en fonction de la requête de service si le fournisseur de service (201) est un premier fournisseur de service, et générer les informations de tarif correspondantes en fonction de la requête de facturation reçue depuis le fournisseur de service (201) si le fournisseur de service (201) est un second fournisseur de service ; et
un module d'accès de facturation (2023), adapté pour envoyer les informations de tarif à un sous-système de facturation (203), et ordonner au sous-système de facturation (203) de facturer en fonction des informations de tarif, les informations de tarif comprenant des informations relatives à un service spécifique.

7. Passerelle de service ouvert selon la revendication 6, dans lequel le module de détermination (2022) comprend :
une unité de mémorisation, adaptée pour mémoriser une identité, ID, de fournisseur de service fiable, une ID de service fiable, une ID de fournisseur de service non fiable, et une ID de service non fiable ; et
une unité de détermination, adaptée pour déterminer, en fonction d'informations mémorisées dans l'unité de mémorisation ainsi que d'une ID de fournisseur de service correspondant au fournisseur de service ou d'une ID de service correspondant à un service fourni par le fournisseur de service qui sont contenues dans la requête de service, que le type de fournisseur de service est un fournisseur de service fiable ou un fournisseur de service non fiable, et envoyer un résultat de détermination au module de service (2021).

8. Système de réseau, comprenant un fournisseur de service (201), un récepteur de service (204), une passerelle de service ouvert (202) selon la revendication 6 ou 7, et un sous-système de facturation (203), dans lequel
le fournisseur de service (201) est adapté pour fournir un service au récepteur de service (204) par l'intermédiaire de la passerelle de service ouvert (202) ;
le sous-système de facturation (203) est adapté pour facturer en fonction des informations de tarif.

9. Système de réseau selon la revendication 8, dans lequel le second fournisseur de service est un fournisseur de service fiable ou un fournisseur de service qui fournit un service fiable et le premier fournisseur de service est un fournisseur de service non fiable ou un fournisseur de service qui fournit un service non fiable.
